# EUROPÄISCHE PATENTSCHRIFT

(11) **EP 1 234 029 B1**
(45) Veröffentlichungstag und Bekanntmachung des Hinweises auf die Patenterteilung: **09.04.2008**
(21) Anmeldenummer: 00993266.6
(22) Anmeldetag: 01.12.2000
(51) Int. Cl.: C12N 15/10, B01D 39/00

(54) **VERFAHREN ZUR HERSTELLUNG OBERFLÄCHENMODIFIZIERTE TRÄGERMATERIALIEN ZUR BINDUNG BIOLOGISCHER MATERIALIEN**
METHOD FOR THE PRODUCTION OF SURFACE MODIFIED SUPPORTING MATERIALS FOR BINDING BIOLOGICAL MATERIALS
PROCEDE DE FABRICATION DE MATIERES DE SUPPORT A SURFACE MODIFIEE, DESTINEES A LA LIAISON DE MATIERES BIOLOGIQUES

(30) Priorität: 03.12.1999 DE 19958042
(43) Veröffentlichungstag der Anmeldung: 28.08.2002
(73) Patentinhaber: Invitek GmbH, 13125 Berlin (DE); Poly-An Gesellschaft zur Herstellung von Polymeren für spezielle Anwendungen und Analytik mbH, 12489 Berlin (DE)
(72) Erfinder: HILLEBRAND, Timo, 15366 Hönow (DE); BENDZKO, Peter, 12623 Berlin (DE); MATUSCHEWSKI, Heike, 13187 Berlin (DE); SCHEDLER, Uwe, 10119 Berlin (DE); THIELE, Thomas, 13351 Berlin (DE)
(74) Vertreter: Baumbach, Friedrich
(86) Internationale Anmeldenummer: PCT/DE2000/004287
(87) Internationale Veröffentlichungsnummer: WO 2001/040459

(56) Entgegenhaltungen:
- EP-A- 0 366 438
- WO-A-00/34463
- WO-A-01/03149
- WO-A-96/09379
- DE-A- 4 309 248
- US-A- 5 216 127
- US-A- 5 906 734
- SCHULZ M. ET AL: "FUNKTIONALISIERTE POLYMEROBERFLACHEN" CLB CHEMIE IN LABOR UND BIOTECHNIK, Bd. 51, Nr. 3, 2000, Seiten 84-86, XP001015413
- SERGEYEVA T A ET AL: "Molecularly imprinted polymer membranes for substance-selective solid-phase extraction from water by surface photo-grafting polymerization" JOURNAL OF CHROMATOGRAPHY,ELSEVIER SCIENCE PUBLISHERS B.V. AMSTERDAM,NL, Bd. 907, Nr. 1-2, 12. Januar 2001 (2001-01-12), Seiten 89-99, XP004228063 ISSN: 0021-9673

## Beschreibung

Die Erfindung betrifft Verfahren zur Herstellung oberflächenmodifizierter Trägermaterialien zur Bindung biologischer Materialien, und zur Isolierung und Reinigung von Nukleinsäuren, insbesondere von Plasmid-DNA. Die erfindungsgemäßen Träger sind gekennzeichnet durch eine Polymerschicht auf der Oberfläche, die negativ geladene funktionalisierte Gruppen aufweist.

Die Isolierung und Aufreinigung biologischer Materialien, insbesondere von Polynukleotiden spielt eine ganz wichtige Rolle in allen Bereichen der modernen Biochemie und Biotechnologie. Die Nachfrage nach effizienten Verfahrenslösungen zur Isolierung und Aufreinigung von Nukleinsäuren steigt stetig. Besonderer Schwerpunkt liegt auf der Isolierung von Plasmid-DNA aus bakteriellen Lysaten.

Plasmid DNA aus bakteriellen Lysaten kann nach dem Stand der Technik chemisch mit einem sehr einfachen Verfahren isoliert werden. Dazu wird das Bakterienpellet in einem Puffer, bestehend aus Glucose, Tris-HCl sowie EDTA resuspendiert, nachfolgend mit einem SDS/NaOH-Puffer lysiert und mit einem Puffer, bestehend aus Kalium- oder Natriumacetat, neutralisiert. Die Neutralisierungsreaktion führt zur Komplexierung und nachfolgenden Ausfällung chromosomaler DNA und Proteine, welche durch einen Zentrifugationsschritt pelletiert werden. Der resultierende Überstand enthält die Plasmid DNA, welche durch Zugabe eines Alkohols ausgefällt, nachfolgend gewaschen, getrocknet und final das erhaltene Plasmid-DNA-Pellet in einem Tris-Puffer hydratisiert wird.

Dieses Verfahren ist sehr einfach und preiswert und benötigt keine ökologisch und toxikologisch bedenklichen Stoffe. Allerdings ist eine Automatisierung dieses Verfahrens schwer zu realisieren und zudem durch die vielen manuellen Arbeitsschritte sehr zeitaufwendig.

Kommerziell verfügbare Verfahren zur Isolierung von Plasmid-DNA (auch deren vollautomatische Isolierung) nutzen sehr effiziente Membrantechnologien zur Bindung von Nukleinsäuren. Für die Nukleinsäurebindung sind chaotrope Ionen essentiell. Dem Fachmann ist bekannt, das diese chaotropen Salze als Bestandteile von Puffern die dreidimensionale Struktur von Wasserstoffbrückenbindungen zerstören. Dies führt zur Schwächung intramolekularer Bindungskräfte, welche zur Ausbildung von Raumstrukturen (z.B. Sekundär-, Tertiär- oder Quartärstrukturen) bei biologischen Molekülen beteiligt sind. Durch diese Störungen übergeordneter Strukturen des wässrigen Millieus wird es möglich, dass die Nukleinsäuren an der Oberfläche von mineralischen Materialien, insbesondere von Glas-bzw. Silicapartikeln adsorbieren. Die nach dem Stand der Technik Verwendung findenden festen Phasen sind ausschließlich Siliziumträger, Diatomenerden oder Gläser, wobei diese Materialien für den Prozess der Nukleinsäureextraktionen als Filtermembranen oder als Suspensionen vorliegen. Für die Isolierung der Nukleinsäuren werden sie immer mit Lösungen, die chaotrope Salze enthalten, in Reaktionsansätzen kombiniert, um die gewünschten Nukleinsäuren zu isolieren oder aufzureinigen. Chaotrope Salze werden im Reaktionsablauf als zusätzliche Pufferkomponenten nach der Neutralisationsreaktion zugegeben oder sind bereits Bestandteil des Neutralisationspuffers. Der klarzentrifugierte Überstand wird dann nicht einer Ethanolfällung zugeführt, sondern mit der festen Phase (Glasmaterialien; Silicamaterialien) in Verbindung gebracht und an dieser festen Phase gebunden, nachfolgend gewaschen und letztlich mit einem Puffer geringer Ionenstärke wieder von der festen Phase eluiert.

Diese Verfahren sind zwar einfach in der Durchführung, zeitsparend und unter Verwendung von Bindungsmembranen komplett automatisierbar, durch den Einsatz chaotroper Pufferkomponenten aber teuer sowie gesundheits- und umweltgefährdend.

Auch das in DE 197 46 874 A1 beschriebene Mittel zur Bindung von Nukleinsäuren unter der Verwendung von hydrophoben Membranen, welches zur Isolierung von RNA eingesetzt wird, setzt die bekannten chaotropen Salze als Reaktionskomponente zur Bindung ein.

Alternative Verfahren zur Reinigung von DNA-Molekülen unter Anwendung der Festphasenextraktion, die für die Bindung der DNA keine chaotropen Ionen verwenden, sind ebenfalls bekannt. Dabei erfolgt die Nukleinsäurebindung an chemisch modifizierte feste Phasen, die durch chemische Modifizierungsreaktionen mit positiven Ionenladungen dotiert wurden. Somit wird zwischen der positiv geladenen Oberfläche der eingesetzten Membranen und der negativen Ionenladung des Phosphatrückgrats von Nukleinsäuren durch Coulombsche Wechselwirkungen eine Bindung ausgebildet (US 5,523,392 A; Purification of DNA on Aluminium Silicates and Phosphosilicates; US 5,503,816 A; Silicates Compounds for DNA Purification; US 5,674,997 A; DNA purification on modified Silicates; US 5,438,127 A; DNA Purification by solid phase extraction using a PCl₃ modified glass fiber membrane; US 5,606,046 A; DNA purification by solid phase extraction using trifluorometric acid washed glass fiber membrane; US 5,610,291 A; Glass fiber membranes modified by treatment with SiCl₄, AlCl₃, or BCl₃ and washing with NaOH to set as a DNA adsorbant; US 5,616,701 A; DNA purification by solid phase extraction using a hydroxide-washed glass fiber membrane; US 5,650,506 A; Modified lass fiber membranes useful for DNA purification by solid phase extraction).

DE 43 09 248 A beschreibt die Herstellung von polyphosphatmodifizierten amorphen anorganischen porösen oder nichtporösen Grundmaterialien, wie Zirkonium(IV)-oxid, sowie deren Verwendung zur Reinigung und Immobilisierung von Nukleinsäuren und Proteinen. Die Herstellung erfolgt dabei durch eine thermische Kopplung der Polyphosphate. Es entstehen anorganische Schichten, die an einem porösen Träger gekoppelt vorliegen.

In WO 96 09379 A wird die DNA-Reinigung und Isolierung an einer festen Phase aus magnetischen Mikropartikeln beschrieben, die eine beschichtete Oberfläche aufweisen. Die magnetischen Mikropartikel bestehen aus anorganischen Substanzen. Die Oberflächenbeschichtung soll Nukleinsäuren binden und kann zum Beispiel CarboxylGruppen umfassen.

US-A-5 906 734 beschreibt passivierte poröse Polymerschichten, und deren Verwendung als Chromatographiesäulen. Die Polymerschicht ist dabei adsorptiv gebunden und jederzeit wieder entfernbar.

In EP-A-0 366 438 werden Verfahren und chromatographische Materialien beschrieben, die zur Trennung von Proteinen und Nukleinsäuren geeignet sind. Dabei wird der im Vergleich mit den meisten Proteinen sehr niedrige isoelektrische Punkt von Nukleinsäuremolekülen ausgenutzt, der es erlaubt bei einem pH-Wert unterhalb des isoelektrischen Punkts eines Proteins, dieses an eine Festkörpermatrix zu binden und dabei gleichzeitig die negativ geladene Nukleinsäure zu eluieren.

US-A-5 216 127 beschreibt ein Adsorbens für Serum Amyloid Protein, das aus Polymeren besteht (z.B. epoxidierte Cellulose). Zur Herstellung wird eine monomere Basis polymerisiert. Die Polymerbeschichtung des Adsorbens umfasst anionische Verbindungen.

Es wird das der Fachwelt hinlänglich bekannte Prinzip der Bindung von Nukleinsäuren an positive geladene feste Phasen genutzt, welches z.B. für DNA/RNA-Blotting-Techniken an positiv geladenen Nylon-Filtern schon viele Jahre Standardapplikation darstellt.

Die Anwendung dieser Membranen setzt jedoch voraus, dass die Nukleinsäuren bereits in einer isolierten Form vorliegen. Über die erzeugten positiven funktionellen Oberflächen können vorher isolierte Nukleinsäuren durch die Coulombsche Wechselwirkungen an den Membranen gebunden werden.

Der Erfindung lag deshalb die Aufgabe zugrunde, Verfahren zur Herstellung von Trägermaterialien zu finden und bereitzustellen, die es ermöglichen, die klassische Chemie zur Isolierung biologischer Materialien, insbesondere zur Isolierung und Reinigung von Nukleinsäuren, mit der Bindung an eine feste Phase zu kombinieren, ohne den Einsatz von gefährlichen Stoffgruppen, wie die chaotropen Salze es sind, und welche darüber hinaus die Möglichkeit für hocheffiziente automatisierbare Verfahrenslösungen bieten.

Überraschend und im Gegensatz zu den bisherigen Modellvorstellungen konnte die Aufgabe durch eine Funktionalisierung der Oberflächen von Trägermaterialien gelöst werden, die dadurch gekennzeichnet ist, dass negative Ladungen auf der Trägeroberfläche vorhanden sind. Überraschend konnte dadurch in Kombination mit der klassischen Chemie eine Bindung biologischer Materialien an eine feste Phase realisiert werden, insbesondere können die negativ funktionalisierten Träger zur Isolierung und Reinigung von Nukleinsäuren, ganz besonders bevorzugt zur Isolierung und Reinigung von Plasmid DNA, verwendet werden.

Die Erfindung wird gemäß den Ansprüchen realisiert. Erfindungsgemäß wird ein fester Träger vorbehandelt und mit Monomerlösungen polymerisationsfähiger Säuren oder ihren Derivaten in Kontakt gebracht, welche auf den Trägeroberflächen pfropfpolymerisiert werden.

Die Vorbehandlung des Trägers erfolgt vorzugsweise alkalisch mit einer Lösung aus einem stark basischen Stoff, vorzugsweise Alkali-Hydroxide oder - Amide, und einem Alkohol, wobei die Base und der Alkohol im Verhältnis 1:2 bis 1:10.000 (0,01%) vorliegen. Dieser Vorgang benötigt bis zu 24 Sunden, vorzugsweise ca. eine bis zwei Stunden. Anschließend wird der Träger so lange gewaschen bis das Waschwasser neutral ist. Danach wird er getrocknet.

Zur Polymerisation wird der Träger in Gegenwart eines Initiators in eine Monomerlösung der polymerisationsfähigen Säuren eingetaucht, feucht belichtet, nach der Belichtung gewaschen und getrocknet.

Gegenstand der Erfindung sind demzufolge Verfahren zur Herstellung oberflächenmodifizierter Trägermaterialien zur Bindung biologischer Materialien, die gekennzeichnet sind durch eine auf der Oberfläche der Trägers befindliche Schicht, welche negativ geladene funktionelle Gruppen aufweist. Gegenstand der Erfindung sind weiterhin Verfahren zur Isolierung von Nukleinsäuren, vorzugsweise von Plasmid-DNA.

Trägermaterialien im Sinne der Erfindung sind mineralische/anorganische Trägermaterialien, die porös oder nicht porös sein können. Vorzugsweise handelt es sich um Siliziumträger, Diatomerden oder Glasmaterialien die in Form von Membranen, Vliesen, Pulvern, Granulaten, Kugeln oder Partikeln u.ä. vorliegen. Als Trägermaterialien kommen aber auch organische Polymere in Betracht, wie z.B. Polypropylen, Polyethylen, Polysulfon, Polyethersulfon, Polystyrol, Polyvinylchlorid, Polyacrylnitril, Zellulose und deren Derivate, Polyamide, Polyimide, Polytetrafluorethylen, Polyvinylidendifluorid, Polyvinylidenfluorid, Polyester, Polycarbonat, Polyacrylate, Polyacrylamid u.a. sowie Copolymere oder Blends der Polymere.

Die Schicht auf der Trägeroberfläche mit negativ geladenen Gruppen stellt erfindungsgmäß eine Polymerschicht dar, die mit den polymerisationsfähigen Säuren oder ihren Gemischen gebildet wurde. Vorzugsweise stellt die Polymerschicht Carbonsäure-, Sulfonsäure- und/oder Phosphorsäure-Derivate dar, insbesondere Derivate der Acrylsäure, der Methacrylsäure, der Styrolsulfonsäure und -phosphorsäure, Acrylamidopropansulfonsäure bzw. auch deren Gemische.

In einer ganz besonderen Ausführungsvariante ist der Träger ein Glasfaservlies, auf dem sich eine Polymerschicht der Acrylsäure, eine Polymerschicht von Acrylat-Salzen der Alkali-Metalle oder eine Polymerschicht aus 2-Acrylamido-2-methylpropansulfonat befindet. In einer anderen bevorzugten Ausführungsvariante liegt der Träger in Form einer Hohlfasermembran aus Glasfaser vor, auf der sich die Polymerschicht befindet.

Das erfindungsgemäße Verfahren wird im folgenden näher erläutert. In der ersten Prozessstufe wird ein beliebiges Trägermaterial für die Dauer von einer Minute bis zwei Stunden, vorzugsweise für eine Stunde, bei Raumtemperatur in eine Lösung von 0,1 g bis 500 g Ätznatron, Ätzkali oder eines anderen stark basischen Stoffes pro 1000 g eines Alkohols, vorzugsweise i-Propanol getaucht. Anschließend wird das der alkoholischen Lösung entnommene Trägermaterial so lange vorzugsweise mit Wasser gewaschen, bis die Waschlösung neutral ist, und getrocknet, vorzugsweise 30 Minuten bei 100°C.

In der sich anschließenden zweiten Prozessstufe wird der vorbehandelte Träger mit einem Photoinitiator, vorzugsweise Benzophenon oder dessen Derivate, beschichtet. Als Lösungsmittel für den Initiator kommen Ketone, Alkohole, Ester und Ether in Frage. Die Konzentration des Initiators beträgt dabei bevorzugt 0,01 g l⁻¹ bis 0,5 g l⁻¹. Das vorbehandelte und mit Initiator beladene Trägermaterial wird in eine Monomerlösung getaucht, aus der Monomerlösung genommen und im feuchten Zustand belichtet. Als Monomere sind alle polymerisationsfähigen Carbonsäure-, Sulfonsäure- und Phosphorsäure-Derivate geeignet, insbesondere die Derivate der Acrylsäure, der Methacrylsäure, der Styrolsulfonsäure und -phosphorsäure, der Acrylamidopropansulfonsäure bzw. auch deren Gemische. Als Lösungsmittel für die Monomeren kommen Alkohole, Ketone, Ester, Ether und insbesondere Wasser sowie Gemische derselben zum Einsatz. Die Konzentration des Monomeren beträgt vorzugsweise 1 g l⁻¹ bis 200 g l⁻¹, besonders geeignet sind Lösungen mit einem Monomergehalt von 50 g l⁻¹.

Als Belichtungsquellen werden vorzugsweise Quecksilberdampflampen, Quecksilberhoch- und -höchstdrucklampen, Halogenlampen, Wolframlampen und Laser mit Emissionen im Bereich der Initiatorabsorption verwendet. Die Belichtungszeit hängt von der Intensität der Strahlungsquelle ab und beträgt je nach deren Leistung einen Bruchteil einer Sekunde bis zu Stunden.

Nach der Belichtung wird das Trägermaterial gewaschen. Als Waschflüssigkeit sind insbesondere die Lösungsmittel geeignet, die für die Herstellung der Monomerlösung eingesetzt wurden. Die präparierten Träger werden abschließend getrocknet.

Durch die erfindungsgemäße abgestimmte Prozessführung entsprechend den beiden angegebenen Stufen werden überraschend Trägermaterialien erhalten, die hervorragend für die Isolierung und Reinigung von biologischen Materialien, insbesondere Plasmid-DNA geeignet sind.

Durch den erfindungsgemäßen Prozess wird die Oberfläche des Trägers offensichtlich aufgrund der Pfropfpolymerisation mit Säuregruppen und deren Salzen funktionalisiert, diese Säuregruppen liegen jedoch, insbesondere verursacht durch das Vorbehandeln der Oberflächen der Träger, als negativ geladene Säureionen vor. Unerwarteterweise werden trotz dieser negativen Gruppen Wechselwirkungen zu biologischen Materialien, insbesondere Wechselwirkungen zur Plasmid DNA aufgebaut. Das erfindungsgemäß modifizierte Trägermaterial ermöglicht in seinen Ausfuhrungsvarianten überraschend eine hocheffiziente Isolierung von Polynukleotiden. Das Verfahren zur Nukleinsäureisolierung wird damit komplett automatisierbar, benötigt keine gefährlichen Stoffe und ist in seinem Einsatz extrem preisgünstig. Es kann, bevorzugt für die Isolierung von Plasmid DNA aus bakteriellen Lysaten, ein alternativer kostengünstiger Kit bereitgestellt werden.

Kits für Plasmid-DNA, die zum jetzigen Zeitpunkt für automatisierbare Verfahren eingesetzt werden, basieren auf der von Vogelstein und Gillespie (Proc. Natl. Acad. Sci. USA, 1979, 76, 615-619) entwickelten und erstmals beschriebenen Methode zur präparativen und analytischen Reinigung von DNA-Fragmenten aus Agarosegelen. Die Methode kombiniert die Auflösung der die zu isolierende DNA-Bande enthaltende Agarose in einer gesättigten Lösung eines chaotropen Salzes (NaJ) mit einer Bindung der DNA an Glaspartikel. Die an die Glaspartikel fixierte DNA wird anschließend mit einer Waschlösung (20 mM Tris HCl [pH 7,2]; 200mM NaCl; 2 mM EDTA; 50% v/v Ethanol) gewaschen und abschließend von den Trägerpartikeln abgelöst. Basierend auf dem bekannten physiko-chemischen Prinzip der Bindung von Nukleinsäuren an Silica bzw. Glasmaterialien in Anwesenheit chaotroper Salze wurden auch eine Reihe von Applikationen zur Isolierung von Plasmid-DNA beschrieben und verschiedenste Trägermaterialien verwendet (z.B. Glasmilk, BIO 101, La Jolla, CA, Diatomenerden (Fa.Sigma) oder auch Silicagele. Diagen, DE 41 39 664 A1).

Der alternative kostengünstige Kit enthält neben den für die Extraktion von Plasmid DNA notwendigen Lösungen ein Trägermaterial, hergestellt nach dem erfindungsgemäßen Verfahren, welches z.B. in Form von Membranen in bzw. auf allen an sich üblichen Kartuschen, Testplatten, Wells eingefügt werden kann.

Anschließend wird die Erfindung an Beispielen näher erläutert, auf die sie sich jedoch nicht beschränken soll.

### Beispiel 1

### Präparation eines Glasfaservlieses als Trägermaterial

Das Glasfaservlies im DIN A4-Format wurde für die Dauer von einer Stunde bei Raumtemperatur in eine KOH/i-Propanol-Lösung im Verhältnis 100:1000 getaucht. Anschließend wurde mit Wasser gewaschen, bis das Waschwasser neutral war und bei 100 °C 30 Minuten getrocknet. Danach wurde das so vorbehandelte Vlies mit dem Photoinitiator Benzophenon (die Konzentration des Initiators betrug dabei 0,15 mol/l ) beschichtet. Als Lösungsmittel für den Initiator wurde Aceton verwendet.
Das vorbehandelte und mit Initiator beladene Glasfaservlies wurde danach in eine Monomerlösung aus Acrylsäure in Wasser getaucht, wobei die Konzentration des Monomeren 50 g l⁻¹ betrug.
Die Belichtung wurde mit einem UV-Trockner der Fa. Beltron mit einer Belichtungszeit von 20 Minuten (entspricht 20 Zyklen durch den Bestrahlungssektor) durchgerührt.

Nach der Belichtung wurde das Glasfaservlies mit Methanol und Wasser extrahiert. Die präparierten Glasfaservliese wurden abschließend getrocknet.

### Beispiel 2

In Analogie zu Beispiel 1 wurde ein Glasfaservlies in eine Monomerlösung des Kali-Salzes der Methacrylsäure in Wasser getaucht.

### Beispiel 3

In Analogie zu Beispiel 1 wurde eine Hohlfasermembran aus Glasfaser in eine Monomerlösung von 2-Acrylamido-2-methylpropansulfonat in Wasser getaucht.

### Beispiel 4

### Isolierung von Plasmid-DNA mittels nicht-funktionalisierten sowie funktionalisierten Vliesen

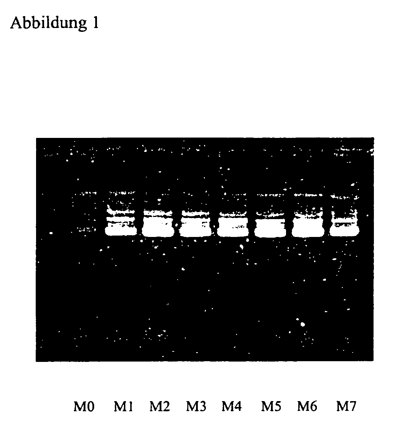

Plasmid-DNA wurde unter Anwendung der klassischen Puffer, d.h. ohne die bisher essentiellen chaotropen Salze und mittels eines nicht-funktionalisierten sowie verschiedenen modifizierten Glasfaservliesen isoliert. Das Ergebnis kann der Abbildung 1 entnommen werden.
- M0: normales Vlies
- M1: Modifikation analog Beispiel 1,
Reaktionszeit: Vorbehandlung: 10 min., Belichtung 10 Zyklen
- M2: Modifikation analog Beispiel 1
Reaktionszeit: Vorbehandlung: 30 min., Belichtung 10 Zyklen
- M3: Modifikation analog Beispiel 1
Reaktionszeit: Vorbehandlung: 1 h, Belichtung 10 Zyklen
- M4: Modifikation analog Beispiel 1
Reaktionszeit: Vorbehandlung: 2 h, Belichtung 10 Zyklen
- M5: Modifikation analog Beispiel 1
Reaktionszeit: Vorbehandlung: 1 h, Belichtung 5 Zyklen
- M6: Modifikation analog Beispiel 1
Reaktionszeit: Vorbehandlung: 1 h, Belichtung 10 Zyklen
- M7: Modifikation analog Beispiel 1
Reaktionszeit: Vorbehandlung: 1 h, Belichtung 20 Zyklen

Es wurden jeweils 2ml Bakteriensuspension in ein 2 ml Reaktionsgefäß überführt und die Zellen durch Zentrifugation bei 14.000 rpm und 1 min. pelletiert. Das Pellet wurde in 100µl Lösung I (25 mM Tris-HCl; 10 mM EDTA; 0,5mg/ml Rnase A) resupendiert. Nachfolgend wurden 300 µl Lösung II (1% SDS/0,2 N NaOH) und 300 µl Lösung III (3 M Kaliumacetat; pH 5,2) zugegeben. Die Lösungen wurden vorsichtig gemischt und für 8 min bei 14.000 rpm zentrifugiert. Der klare Überstand wurde vollständig auf die jeweiligen Filterkartuschen mit dem Vlies überführt und für 1 min bei 12.000 rpm zentrifugiert. Nach Verwerfen des Filtrates wurde das in der Filterkartusche befindliche Vlies zweimal mit einem Waschpuffer (70% Ethanol, 100 mM NaCl; 15 mM Tris-HCl; 2 mM EDTA) durch Zentrifugieren gewaschen. Die Vliese wurden durch 2 minütige Zentrifugation getrocknet. Die Elution der Plasmid DNA erfolgte durch Zugabe von 100 µl eines Elutionspuffers (10 mM Tris-HCl) und nachfolgender 1 minütiger Zentrifugation bei 12. 000 rpm.
Nachfolgend wurden 10 µl der isolierten DNA auf einem 1%igem TAE-Agarosegel analysiert (Abbildung 1).
Wie zu ersehen ist, kann mit dem unmodifizierten Vlies nur sehr unzureichend eine Plasmid-Isolierung durchgeführt werden. Mittels der modifizierten Vliese M1 bis M7 dagegen ist es möglich sehr hohe Ausbeuten und eine qualitativ hochwertige Plasmidisolierung zu realisieren. Der Effekt wird damit eindeutig durch die erfindungsgemäße Funktionalisierung erreicht.

## Patentansprüche

1. Verfahren zur Herstellung von festen oberflächenmodifizierten Trägermaterialien zur Bindung biologischer Materialien, wobei die Trägermaterialien auf der Oberfläche eine organische Polymerschicht aufweisen, die negativ geladene funktionelle Gruppen trägt, **dadurch gekennzeichnet, dass** man einen festen Träger alkalisch vorbehandelt, indem man ihn in eine Lösung aus einem stark basischen Stoff und einem Alkohol taucht, den Träger anschließend so lange wäscht bis das Waschwasser neutral ist und danach trocknet, anschließend mit organischen polymerisationsfähigen Säuren in Kontakt bringt und diese auf den Trägeroberflächen pfropfpolymerisiert.

2. Verfahren nach Anspruch 1, **dadurch gekennzeichnet, dass** das Vorbehandeln des Trägers mit einer Lösung aus Alkali-Hydroxiden oder -Amiden und Alkohol erfolgt, vorzugsweise i-Propanol bis zu 24 Stunden.

3. Verfahren nach Anspruch 1 oder 2, **dadurch gekennzeichnet, dass** die Base und der Alkohol im Verhältnis 1:2 bis 1:10.000 vorliegen.

4. Verfahren nach einem der Ansprüche 1 bis 3, **dadurch gekennzeichnet, dass** die Polymerisation in Gegenwart eines Photoinitiators, erfolgt, wobei der Träger in eine Monomerlösung der polymerisationsfähigen Säuren eingetaucht, herausgenommen, feucht belichtet, nach der Belichtung gewaschen und getrocknet wird.

5. Verfahren nach Anspruch 4, **dadurch gekennzeichnet, dass** die Monomerlösung in einer Konzentration von 1 g/l bis 200 g/l, bevorzugt mit einem Monomergehalt von 50 g/l eingesetzt wird.

6. Verfahren nach Anspruch 4 oder 5, **dadurch gekennzeichnet, dass** als Lösungsmittel für die Monomerlösung Wasser, Alkohole, Ester, Ether, Ketone oder Gemische derselben verwendet werden, vorzugsweise Wasser, Methanol und Aceton.

7. Verfahren nach einem der Ansprüche 1 bis 6, **dadurch gekennzeichnet, dass** als feste Träger mineralische/anorganische Materialien eingesetzt werden.

8. Verfahren nach einem der Ansprüche 1 bis 7, **dadurch gekennzeichnet, dass** als feste Träger poröse oder nicht poröse mineralische Materialien eingesetzt werden.

9. Verfahren nach einem der Ansprüche 1 bis 8, **dadurch gekennzeichnet, dass** als feste Träger Siliziumträger, Diatomerden oder Gläser fungieren, die vorzugsweise in Form von Membranen, Vliesen, Pulvern, Granulaten, Kugeln oder Partikeln vorliegen.

10. Verfahren nach einem der Ansprüche 1 bis 9, **dadurch gekennzeichnet, dass** als feste Träger organische Polymere fungieren, wie z.B. Polypropylen, Polyethylen, Polysulfon, Polyethersulfon, Polystyrol, Polyvinylchlorid, Polyacrylnitril, Zellulose und deren Derivate, Polyamide, Polyimide, Polytetrafluorethylen, Polyvinylidendifluorid, Polyester, Polycarbonat, Polyacrylate, Polyacrylamid sowie Copolymere oder Blends der Polymere.

11. Verfahren nach einem der Ansprüche 1 bis 10, **dadurch gekennzeichnet, dass** als polymerisationsfähige Säuren Carbonsäuren, Sulfonsäuren, Phosphorsäuren und ihre Derivate eingesetzt werden, vorzugsweise Derivate der Acrylsäure, der Methacrylsäure, der Styrolsulfonsäure und - phosphorsäure, der Acrylamidopropansulfonsäure oder deren Gemische.

12. Verfahren nach einem der Ansprüche 1 bis 11, **dadurch gekennzeichnet, dass** der feste Träger ein Glasfaservlies ist, auf dem sich eine Polymerschicht der Acrylsäure befindet.

13. Verfahren nach einem der Ansprüche 1 bis 11, **dadurch gekennzeichnet, dass** der feste Träger ein Glasfaservlies ist, auf dem sich eine Polymerschicht von Methacrylatsalzen der Alkalimetalle befindet.

14. Verfahren nach einem der Ansprüche 1 bis 11, **dadurch gekennzeichnet, dass** der feste Träger eine Hohlfasermembran ist, auf der sich eine Polymerschicht von 2-Acryl-amido-2-propansulfonat befindet.

15. Verfahren zur Isolierung und Reinigung von Nukleinsäuren, wobei die Nukleinsäure an den negativ geladenen funktionellen Gruppen gebunden wird, umfassend
a) Herstellung eines oberflächenmodifizierten Trägermaterials gemäß Anspruch 1 bis 14, das einen Träger und eine auf der Trägeroberfläche kovalent gebundene, durch Pfropfpolymerisation erzeugte Polymerschicht mit negativ geladenen funktionellen Gruppen aufweist,
b) Bindung der Nukleinsäure an das Trägermaterial in Abwesenheit von chaotropen Salzen.

16. Verfahren nach Anspruch 15, **dadurch gekennzeichnet, dass** es sich bei der zu isolierenden Nukleinsäure um Plasmid-DNA handelt.

17. Verfahren nach einem der Ansprüche 15 bis 16, **dadurch gekennzeichnet, dass** das Trägermaterial ein mineralisches/anorganisches Trägermaterial ist.

18. Verfahren nach einem der Ansprüche 15 bis 17, **dadurch gekennzeichnet, dass** das Trägermaterial ein poröses oder nicht poröses mineralisches Trägermaterial ist.

19. Verfahren nach einem der Ansprüche 15 bis 18, **dadurch gekennzeichnet, dass** als Trägermaterial Siliziumträger, Diatomerden oder Glasmaterialien fungieren, die vorzugsweise in Form von Membranen, Vliesen, Pulvern, Granulaten, Kugeln oder Partikeln vorliegen.

20. Verfahren nach einem der Ansprüche 15 bis 19, **dadurch gekennzeichnet, dass** als Trägermaterial organische Polymere, wie z.B. Polypropylen, Polyethylen, Polysulfon, Polyethersulfon, Polystyrol, Polyvinylchlorid, Polyimide, Polytetrafluorethylen, Polyvinylidendifluorid, Polyvinylidenfluorid, Polyester, Polycarbonat, Polyacrylate, Polyacrylamid sowie Copolymere oder Blends der Polymere eingesetzt werden.

21. Verfahren nach einem der Ansprüche 15 bis 20, **dadurch gekennzeichnet, dass** die durch Pfropfpolymerisation erzeugte Polymerschicht aus polymerisationsfähigen Carbonsäuren, Sulfonsäuren und Phosphorsäuren sowie ihren Derivaten gebildet ist, vorzugsweise aus Derivaten der Acrylsäure, der Methacrylsäure, der Styrolsulfonsäure und -phosphorsäure, der Acrylamidopropansulfonsäure und deren Gemische.

22. Verfahren nach einem der Ansprüche 15 bis 21, **dadurch gekennzeichnet, dass** der Träger ein Glasfaservlies ist, auf dem sich eine Polymerschicht der Acrylsäure befindet.

23. Verfahren nach einem der Ansprüche 15 bis 22, **dadurch gekennzeichnet, dass** der Träger ein Glasfaservlies ist, auf dem sich eine Polymerschicht von Methacrylat-Salzen der Alkali-Metalle befindet.

24. Verfahren nach einem der Ansprüche 15 bis 23, **dadurch gekennzeichnet, dass** der Träger eine Hohlfasermembran ist, auf dem sich eine Polymerschicht aus 2-Acrylamido-2-propansulfonat befindet.

## Claims

1. Method for the manufacture of solid, surface-modified carrier materials for binding of biological materials, said carrier materials manifesting on the surface an organic polymer layer carrying negatively charged functional groups, wherein a sold carrier is subjected to alkali pre-treatment by it being immersed in a solution of a strongly basic substance and an alcohol, the carrier subsequently being washed until the washing water is neutral and then dried, subsequently being put into contact with organic, polymerisation-capable acids and the latter being grafted on the carrier surfaces.

2. Method according to Claim 1, wherein the pre-treatment of the carrier is done with a solution of alkali hydroxides or amides and alcohol, preferably isopropyl alcohol, for up to 24 hours.

3. Method according to Claim 1 or 2, wherein the base and the alcohol are available in a ratio of 1:2 to 1:10.000.

4. Method according to one of Claims 1 to 3, wherein the polymerisation is done in the presence of a photo-initiator with the carrier being immersed in a monomer solution of the polymerisation-capable acids, removed, exposed to light while moist, washed after the exposure and dried.

5. Method according to Claim 4, wherein the monomer solution is used with a concentration of 1 g/l to 200 g/l, preferably with a monomer content of 50 g/l.

6. Method according to Claim 4 or 5, wherein water, alcohols, ester, ether, ketones or mixtures thereof are used as solvents for the monomer solution, preferably water, methanol and acetone.

7. Method according to one of Claims 1 to 6, wherein mineral/inorganic materials are used as solid carriers.

8. Method according to one of Claims 1 to 7, wherein porous or non-porous mineral materials are used as solid carriers.

9. Method according to one of Claims 1 to 8, wherein silicone carriers, diatomaceous earths or glasses act as solid carriers, preferably available in the form of membranes, fleeces, powders, granulates, balls or particles.

10. Method according to one of Claims 1 to 9, wherein organic polymers such as polypropylene, polyethylene, polysulfone, polyethersulfone, polystyrene, polyvinyl chloride, polyacrylnitrile, cellulose and its derivatives, polyamides, polyimides, polytetrafluoroethylene, polyvinylidendifluoride, polyester, polycarbonate, polyacrylates, polyacrylamide and co-polymers or blends of the polymers act as solid carriers.

11. Method according to one of Claims 1 to 10, wherein carbonic acids, sulfonic acids, phosphoric acids and their derivatives are used as polymerisation-capable acids, preferably derivatives of acrylic acid, methacrylic acid, styrenesulfonic acid and phosphoric acid, of acrylamidopropanesulfonic acid and mixtures thereof.

12. Method according to one of Claims 1 to 11, wherein the solid carrier is a fibreglass fleece on which a polymer layer of the acrylic acid is located.

13. Method according to one of Claims 1 to 11, wherein the solid carrier is a fibreglass fleece on which a polymer layer of methacrylate salts of the alkali metals is located.

14. Method according to one of Claims 1 to 11, wherein the solid carrier is a hollow-fibre membrane on which a polymer layer of 2-acrylamido-2-propanesulfonate is located.

15. Method for isolation and cleansing of nucleic acids, with the nucleic acid being bound to the negatively charged functional groups, comprising
a) manufacture of a surface-modified carrier material according to Claims 1 to 14, manifesting a carrier and a polymer layer with negatively charged functional groups generated by grafting and covalently bound to the surface of the carrier,
b) binding of the nucleic acid to the carrier material in the absence of chaotropic salts.

16. Method according to Claim 15, wherein the nucleic acid to be isolated is plasmid DNA.

17. Method according to one of Claims 15 to 16, wherein the carrier material is a mineral/inorganic carrier material.

18. Method according to one of Claims 15 to 17, wherein the carrier material is a porous or non-porous mineral carrier material.

19. Method according to one of Claims 15 to 18, wherein silicone carriers, diatomaceous earths or glass materials act as solid carriers, preferably available in the form of membranes, fleeces, powders, granulates, balls or particles.

20. Method according to one of Claims 15 to 19, wherein organic polymers such as polypropylene, polyethylene, polysulfone, polyethersulfone, polystyrene, polyvinyl chloride, polyimides, polytetrafluoroethylene, polyvinylidendifluoride, polyvinylidenfluoride, polyester, polycarbonate, polyacrylates, polyacrylamide and co-polymers or blends of the polymers are used as carrier material.

21. Method according to one of Claims 15 to 20, wherein the polymer layer generated by grafting is formed from polymerisation-capable carbon acids, sulfonic acids and phosphoric acids and their derivatives, preferably from derivatives of acrylic acid, methacrylic acid, styrenesulfonic acid and phosphoric acid, of acrylamidopropanesulfonic acid and mixtures thereof.

22. Method according to one of Claims 15 to 21, wherein the carrier is a fibreglass fleece on which a polymer layer of the acrylic acid is located.

23. Method according to one of Claims 15 to 22, wherein the carrier is a fibreglass fleece on which a polymer layer of methacrylate salts of the alkali metals is located.

24. Method according to one of Claims 15 to 23, wherein the carrier is a hollow-fibre membrane on which a polymer layer of 2-acrylamido-2-propanesulfonate is located.

## Revendications

1. Procédé de fabrication de matériaux supports solides à surface modifiée pour la liaison de matériaux biologiques, les matériaux supports présentant à leur surface une couche organique polymère qui porte des groupes fonctionnels à charge négative, **se caractérisant par le fait que** l'on alcalinise au préalable un support solide en le plongeant dans une solution composée d'une substance fortement basique et d'un alcool, en lavant ensuite le support jusqu'à ce que l'eau de lavage soit neutre et en le séchant ensuite, puis en le mettant en contact avec des acides organiques polymérisables et en faisant subir à ces acides une polymérisation greffée sur les surfaces du support.

2. Procédé selon la revendication 1, **se caractérisant par le fait que** le traitement préliminaire du support se fait avec une solution d'alcali caustique ou d'amidures alcalins et d'alcool, de préférence du propanol durant 24 heures maximum.

3. Procédé selon la revendication 1 ou 2, **se caractérisant par le fait que** les bases et l'alcool sont en rapport 1:2 jusqu'à 1:10.000.

4. Procédé selon l'une des revendications 1 à 3, **se caractérisant par le fait que** la polymérisation se réalise en présence d'un photo-initiateur, le support étant plongé dans une solution monomère d'acides polymérisables, étant sorti, exposé en atmosphère humide, lavé et séché après l'exposition.

5. Procédé selon la revendication 4, **se caractérisant par le fait que** la solution monomère est utilisée dans une concentration de 1 g/l à 200 g/l, de préférence avec une teneur en monomère de 50 g/l.

6. Procédé selon la revendication 4 ou 5, **se caractérisant par le fait que** le solvant utilisé pour la solution monomère soit de l'eau, des alcools, des esters, de l'éther, de la cétone ou un mélange de ces solvants, de préférence de l'eau, du méthanol et de l'acétone.

7. Procédé selon l'une des revendications 1 à 6, **se caractérisant par le fait que** les supports solides utilisés soient des matériaux minéraux/anorganiques.

8. Procédé selon l'une des revendications 1 à 7, **se caractérisant par le fait que** les supports solides utilisés soient des matériaux minéraux poreux ou non poreux.

9. Procédé selon l'une des revendications 1 à 8, **se caractérisant par le fait que** des supports de silicium, des terres à diatomées ou des verres qui se présentent de préférence sous forme de membranes, de non-tissés, de poudres, de granulés, de billes ou de particules, remplissent la fonction de supports solides.

10. Procédé selon l'une des revendications 1 à 9, **se caractérisant par le fait que** des polymères organiques tels que le polypropylène, le polyéthylène, le polysulfone, le polyéther-sulfone, le polystyrène, le chlorure de polyvinyle, le polyacrylonitrile, la cellulose et ses dérivés, la polyamide, la polyimide, le polytétrafluoréthylène, le polyvinulidènefluorure, le polyester, le polycarbonate, le polyacrylate, le polyacrylamide ainsi que les copolymères ou des mélanges de polymères, remplissent la fonction de supports solides.

11. Procédé selon l'une des revendications 1 à 10, **se caractérisant par le fait que** des acides carboxyliques, des acides sulfoniques, des acides phosphoriques et leurs dérivés, de préférence des dérivés de l'acide acrylique, de l'acide méthacrylique, de l'acide sulfonique styrène et l'acide phosphorique styrène, l'acide sulfonique propionique acrylamide ou leurs mélanges, sont utilisés en tant qu'acides polymérisables.

12. Procédé selon l'une des revendications 1 à 11, **se caractérisant par le fait que** le support solide est un non-tissé de fibres de verre sur lequel se trouve une couche polymère de l'acide acrylique.

13. Procédé selon l'une des revendications 1 à 11, **se caractérisant par le fait que** le support solide est un non-tissé de fibres de verre sur lequel se trouve une couche polymère de sels méthacrylates des métaux alcalins.

14. Procédé selon l'une des revendications 1 à 11, **se caractérisant par le fait que** le support solide est une membrane à fibre creuse sur laquelle se trouve une couche polymère de 2-acrylamido-2-sulfonate propionique.

15. Procédé d'isolation et de nettoyage d'acides nucléiques, l'acide nucléique étant lié aux groupes fonctionnels à charge négative, englobant
a) la fabrication d'un matériau support à surface modifiée selon les revendications 1 à 14, qui présente un support et une couche polymère liée en covalence sur la surface du support et générée par polymérisation greffée, avec des groupes fonctionnels à charge négative.
b) liaison de l'acide nucléique au matériau support en l'absence de sels chaotropes.

16. Procédé selon la revendication 15, **se caractérisant par le fait que** l'acide nucléique à isoler est un ADN de plasmide.

17. Procédé selon l'une des revendications 15 à 16, **se caractérisant par le fait que** le matériau support est un matériau support minéral/anorganique.

18. Procédé selon l'une des revendications 15 à 17, **se caractérisant par le fait que** le matériau support est un matériau support minéral poreux ou non poreux.

19. Procédé selon l'une des revendications 15 à 18, **se caractérisant par le fait que** des supports de silicium, des terres à diatomées ou des verres qui se présentent de préférence sous forme de membranes, de non-tissés, de poudres, de granulés, de billes ou de particules, remplissent la fonction de supports.

20. Procédé selon l'une des revendications 15 à 19, **se caractérisant par le fait que** des polymères organiques tels que le polypropylène, le polyéthylène, le polysulfone, le polyéther-sulfone, le polystyrène, le chlorure de polyvinyle, la polyimide, le polytétrafluoréthylène, le polyvinulidènedifluorure, le polyvinulidènefluorure, le polyester, le polycarbonate, le polyacrylate, le polyacrylamide ainsi que les copolymères ou des mélanges de polymères, sont utilisés comme matériau support.

21. Procédé selon l'une des revendications 15 à 20, **se caractérisant par le fait que** la couche polymère générée par polymérisation greffée se compose d'acides carboxyliques, d'acides sulfoniques, d'acides phosphoriques polymérisables et de leurs dérivés, de préférence de dérivés de l'acide acrylique, de l'acide méthacrylique, de l'acide sulfonique styrène et l'acide phosphorique styrène, l'acide sulfonique propionique acrylamide ou de leurs mélanges.

22. Procédé selon l'une des revendications 15 à 21, **se caractérisant par le fait que** le support est un non-tissé de fibres de verre sur lequel se trouve une couche polymère de l'acide acrylique.

23. Procédé selon l'une des revendications 15 à 22, **se caractérisant par le fait que** le support est un non-tissé de fibres de verre sur lequel se trouve une couche polymère de sels méthacrylates des métaux alcalins.

24. Procédé selon l'une des revendications 15 à 23, **se caractérisant par le fait que** le support est une membrane à fibre creuse sur laquelle se trouve une couche polymère de 2-acrylamido-2-sulfonate propionique.
